# FASCICULE DE BREVET EUROPEEN

(11) **EP 1 266 559 B1**
(45) Date de publication et mention de la délivrance du brevet: **05.01.2005**
(21) Numéro de dépôt: 02291219.0
(22) Date de dépôt: 17.05.2002
(51) Int. Cl.: A01D 45/00, A01D 11/02

(54) **Dispositif pour la cueillette automatique de plantes poussant dans le sol**
Vorrichtung zum automatisches Ernten von aus dem Boden auftauchenden Pflanzen
Device for automatic harvesting of plants emerging from the soil

(30) Priorité: 12.06.2001 FR 0107701
(43) Date de publication de la demande: 18.12.2002
(73) Titulaire: Kirpy, 47390 Layrac (FR)
(72) Inventeur: Lenoir, François, 33200 Bordeaux (FR); Villes, Christian, 47600 Nerac (FR); Camal, Paul, 47600 Nerac (FR)
(74) Mandataire: Laget, Jean-Loup

(56) Documents cités:
- DE-C- 195 832
- DE-C- 381 216
- FR-A- 2 668 884
- US-A- 1 775 142

## Description

La présente invention a pour objet un dispositif pour la cueillette automatique de plantes poussant dans le sol.

Le dispositif décrit ci-après concerne plus particulièrement la cueillette des asperges ; mais, contrairement aux dispositifs antérieurs connus, n'est pas limité à la cueillette des asperges et peut être utilisé pour d'autres plantes poussant dans le sol, comme des carottes par exemple.

La disposition consistant à enfoncer dans le sol, à la profondeur voulue, un outil tranchant qui coupe l'asperge à la longueur voulue est en soi-même connue.

De tels dispositifs de coupe sont décrits, entre autres, dans les brevets EP 0 922 381 ; DE 41 859 ; US 1 775 142 ; DE 363 961 ; FR 2601 548 ; NL 1 001 358 et FR 2 668 884. Le document DE-C-195832 décrit un dispositif de coupe qui correspond au préambule de la revendication 1 de la présente demande.

Les moyens de coupe décrits dans ces brevets sont des outils actionnés manuellement, mais ils pourraient, pour certains d'entre eux être automatisés.

Malgré cela, ils ne conviennent pas pour une machine automatique de récolte telle que celle décrite dans le brevet du demandeur FR-A-2824699, parce que l'extraction hors du sol de l'asperge ainsi coupée se fait ou doit se faire manuellement et ces outils ne peuvent pas être utilisés pour d'autres plantes.

La présente invention concerne un outil automatique de cueillette d'une plante poussant dans le sol du type comportant un guide s'enfonçant verticalement dans le sol, associé à un moyen de coupe disposé au voisinage de l'extrémité dudit guide, caractérisé par le fait que le guide est constitué par une structure parallélépipédique et le moyen de coupe est constitué d'au moins un élément tranchant, monté à pivotement à l'extrémité de la structure parallélépipédique, le pivotement de cet élément tranchant provoquant simultanément la coupure de la plante et la fermeture de la base du parallélépipède ; de sorte que lorsque ce dernier est relevé, il entraîne avec lui un volume sensiblement parallélépipédique de terre à l'intérieur duquel se trouve la plante cueillie.

A titre d'exemple non limitatif et pour faciliter la compréhension de l'invention, on a représenté aux dessins annexés :
- Figure 1, une vue en perspective d'un mode de réalisation de l'invention.
- Figure 2, une vue de face du dispositif de la figure 1.
- Figure 3, une vue en perspective d'une première variante de réalisation, l'élément tranchant étant en position ouverte.
- Figure 4, une vue en perspective du dispositif de la figure 3, l'élément tranchant étant en position fermée.
- Figure 5, une vue en perspective d'une deuxième variante de réalisation, l'élément tranchant étant en position ouverte.
- Figure 6, une vue en perspective du dispositif de la figure 5, l'élément tranchant étant en position fermée.

En se reportant à ces figures, on voit que le dispositif selon l'invention est constitué par quatre tiges parallèles 1, 2, 3 et 4 qui définissent un parallélépipède.

Dans l'exemple représenté, ce parallélépipède est de section carrée, mais l'invention n'est pas limitée à ce mode de réalisation.

A leur partie supérieure, les tiges 1, 2, 3,et 4 sont portées par un support 10.

A leur partie inférieure, les tiges 1, 2, 3 et 4 sont reliées l'une à l'autre par des petites tiges 7 de longueurs égales qui forment un carré.

A l'extrémité des tiges 1 et 2, juste au-dessus de la tige de jonction 7, est monté à pivotement un volet 5. De la même façon, un volet 6 est monté à pivotement entre les tiges 3 et 4.

La largeur des volets 5 et 6 est légèrement supérieure à la moitié d'une tige 7 de telle sorte que, lorsque lesdits volets 5 et 6 pivotent vers l'intérieur du parallélépipède, leurs rebords viennent en appui l'un contre l'autre ; de sorte que ces volets constituent des couteaux.

De préférence, ces rebords sont dentelés de façon que leurs dents viennent s'imbriquer les unes entre les autres et ces dents sont aiguisées.

Le basculement des volets 5 et 6 est commandé par les bielles 8 et 9, lesquelles sont reliées à une barre de commande 11 qui coulisse dans deux fenêtres rectangulaires 12. La barre 11 est attelée à l'extrémité de la tige 13 d'un piston 14.

Le support 10 est un fer plat carré auquel sont fixées les extrémités supérieures des tiges 1 à 4 et ce support est lui-même relié à l'extrémité de la tige d'un vérin porté par le châssis 20.

Le châssis 20 porte également le vérin 14.

Le fonctionnement de ce dispositif est décrit ci-après.

Lorsque le châssis 20 est amené, par tout moyen approprié, tel par exemple que celui décrit dans le brevet FR-A-2824699, au-dessus d'une plante à cueillir, une asperge par exemple, le vérin portant le support **10** est mis en oeuvre de sorte que le parallélépipède formé par les quatre tiges 7 et les quatre tiges 1, 2, 3 et 4 s'enfonce dans le sol.

La course du vérin d'enfoncement est déterminée par avance de façon à être supérieure de quelques centimètres à la longueur souhaitée de la plante.

Dans le cas des asperges, comme la longueur voulue est d'environ 25 cm, la course du vérin d'enfoncement est réglée de façon que la profondeur de l'enfoncement soit d'environ 28 à 29 cm.

Quand cette profondeur est atteinte le vérin 14 est mis en oeuvre, ce qui fait descendre la barre 11 qui coulisse dans les fenêtres 12 formant glissière et les volets 5 et 6 pivotent l'un vers l'autre, à l'intérieur du parallélépipède et cela jusqu'à ce que leurs rebords viennent en contact.

Ce mouvement a pour effet que l'asperge est coupée à sa base et que le fond du parallélépipède est fermé.

Le vérin d'enfoncement est alors actionné en sens inverse et le parallélépipède est soulevé hors du sol en emmenant avec lui la terre qui se trouve à l'intérieur du parallélépipède et l'asperge qui s'y trouve.

Le châssis est ensuite déplacé latéralement et le vérin 14 est à nouveau actionné, mais en sens inverse, pour que les volets 5 et 6 s'ouvrent ce qui a pour effet que la terre qui se trouve dans le parallélépipède tombe au sol et l'asperge est libérée.

Il peut s'avérer, surtout dans les terrains très sablonneux, que lors de la remontée, la terre s'écoule entre les tiges 1, 2, 3 et 4 et que l'asperge tombe alors, prématurément, hors du parallélépipède.

Pour éviter cela on peut, avantageusement, fermer un ou plusieurs côtés du parallélépipède en disposant des tôles plates entre les tiges 1 et 2 ; puis 2 et 3 ; puis 3 et 4 ; puis 4 et 1.

Il peut également s'avérer avantageux d'aiguiser les parties inférieures des tiges 7 pour faciliter l'enfoncement dans le sol.

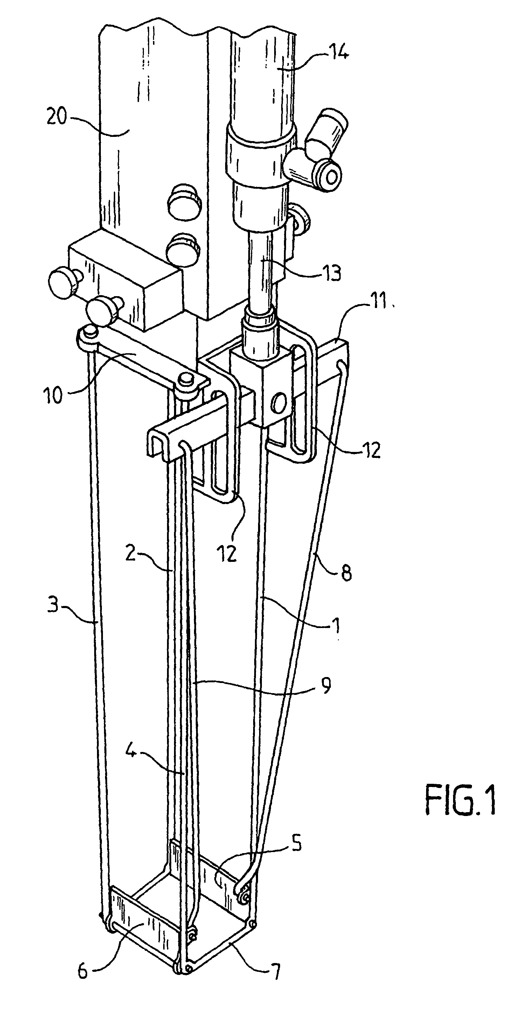

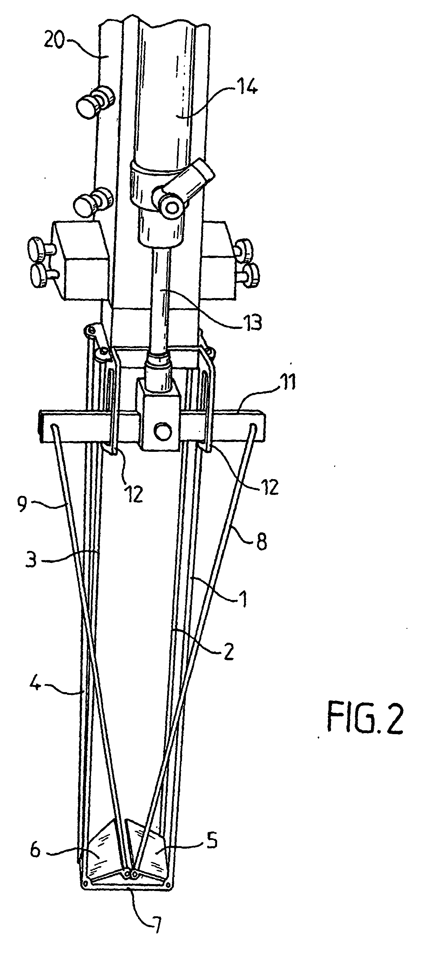

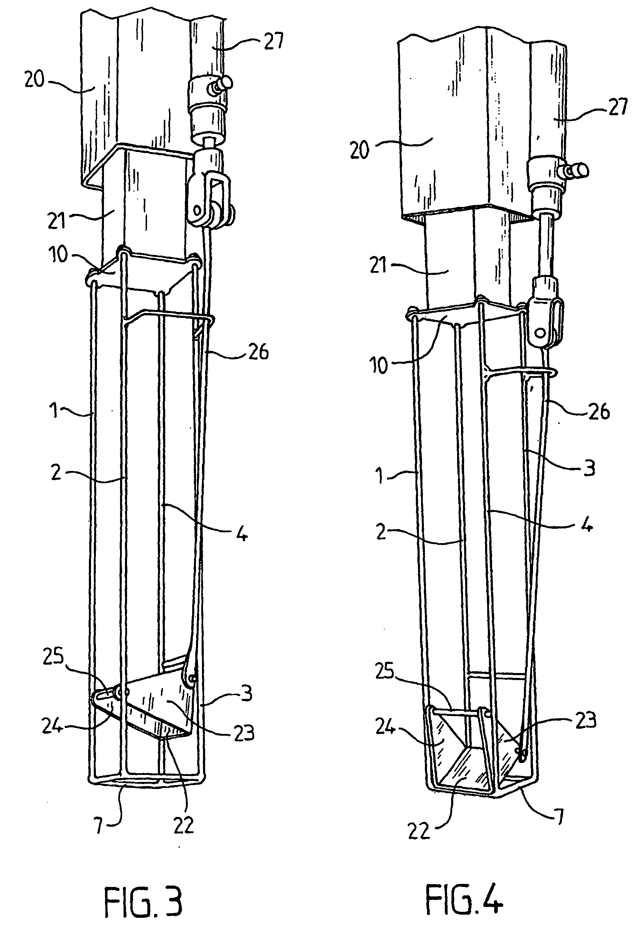

Les figures 3 et 4 représentent une première variante de réalisation du dispositif selon l'invention, variante dans laquelle les mêmes éléments que ceux décrits en rapport avec les figures 1 et 2 sont désignés par les mêmes références.

On voit ainsi que le châssis 20 est une pièce tubulaire creuse de section carrée ou rectangulaire dans laquelle coulisse une tige 26, qui porte le support 10.

Comme dans l'exemple précédent, le support 10 porte une structure parallélépipédique constituée par quatre tiges parallèles 1, 2, 3, 4 et un carré 7 à leur extrémité inférieure.

Dans ce mode de réalisation, l'élément de coupe et de fermeture est constitué par une plaque 22, portée par deux pièces triangulaires 23 et 24 qui lui sont perpendiculaires ; de sorte que cet élément a une forme analogue à un godet sans fond. Cet élément 22, 23, 24 est monté à pivotement sur une traverse 25 portée par les tiges 1 et 2.

Une bielle de commande 26 est reliée à l'extrémité d'un vérin 27 porté par le châssis 20.

Le fonctionnement est analogue à celui du dispositif des figures 1 et 2.

Lorsque les pièces sont dans la position décrite à la figure 3, l'élément de coupe 22, 23, 24 est en position ouverte.

Lorsque la tige 21 descend (sous l'action d'un vérin non représenté situé à l'intérieur du châssis 20), la structure parallélépipédique 1, 2, 3, 4 et 7 s'enfonce dans le sol, la terre passant le long de la plaque 22, qui est en position verticale et entre les pièces triangulaires 23 et 24.

Le mouvement de descente de la tige 21 est arrêté lorsque la structure parallélépipédique a été enfoncée à la profondeur voulue.

A ce moment le vérin 27 est mis en action et, par l'intermédiaire de la bielle 26, fait basculer l'ensemble 22, 23 et 24.

En basculant, la plaque 22 vient couper la plante et fermer le carré 7.

La tige 21 est alors remontée et, la terre ne pouvant s'écouler vers le bas, la structure parallélépipédique soulève un volume de terre à l'intérieur duquel se trouve la plante.

Comme dans l'exemple précédent, le châssis 20 est déplacé jusqu'à un endroit approprié ; le vérin 27 est activé pour faire basculer l'ensemble 22, 23, 24 ; la terre tombe et libère la plante.

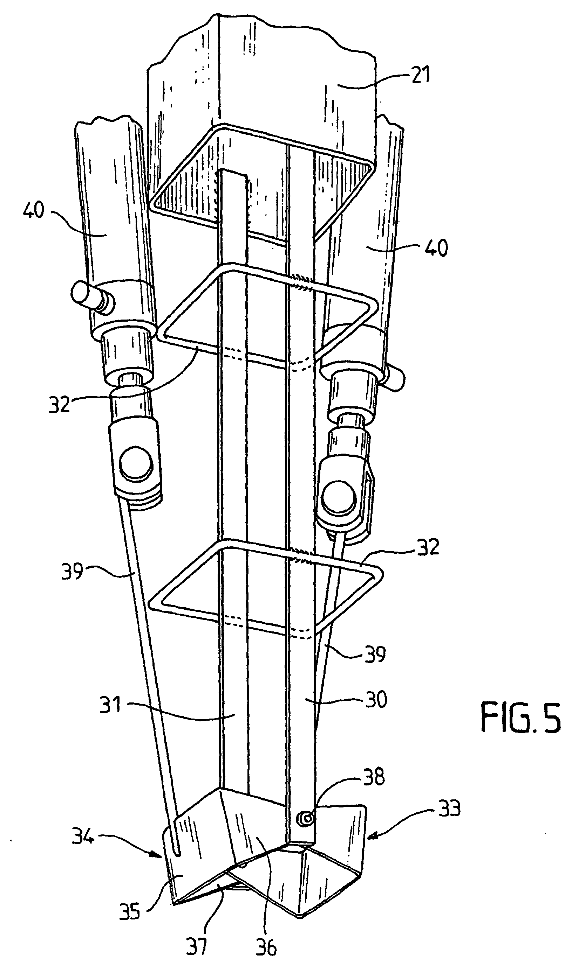

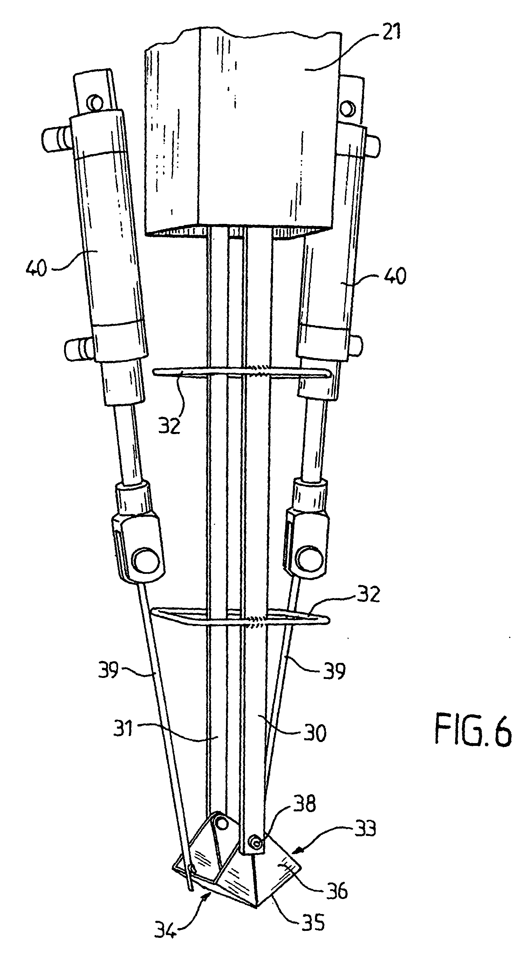

Les figures 5 et 6 illustrent un autre mode de réalisation de l'invention.

Dans ce mode de réalisation, la structure parallélépipédique est constituée par deux fers plats symétriques 30 et 31 fixés à l'extrémité de la tige 21 portant un ou plusieurs cadres 32 rectangulaires ou carrés.

A l'extrémité des deux fers plats 30 et 31, sont montés à pivotement deux éléments 33 et 34 ayant une forme analogue à celle des godets d'une pelle mécanique et qui sont constitués, chacun, comme l'élément analogue des figures 3 et 4, d'une plaque 35 portée par deux flancs triangulaires 36 et 37 portés par un pivot 38 situé à l'extrémité de chaque fer plat 30 et 31.

Chaque godet 33 ou 34 est relié à une bielle 39 et chaque bielle 39 est reliée à la tige d'un vérin 40.

Les dimensions des godets 33 et 34 sont déterminées de façon telle, que lorsqu'ils sont dans la position ouverte de la figure 5, ils aient un encombrement qui correspond à celui des cadres 32.

Le fonctionnement est le même que celui des deux dispositifs précédemment décrits.

Sous l'action de la tige 21 la structure parallélépipédique constituée par les fers plats 30, 31, les cadres 32 et les deux godets ouverts 33 et 34 s'enfoncent dans le sol. Lorsque cette structure est arrivée à la profondeur voulue, les deux vérins 40 sont actionnés et les deux godets se referment en coupant la plante et en fermant la base de la structure parallélépipédique ; de sorte que lorsque la tige 21 remonte, ladite structure emporte un volume de terre au milieu duquel est la plante et que lorsque les deux godets sont ouverts la terre tombe et libère la plante.

Dans le cas des figures 3 à 6 on peut, lorsque la terre est trop friable remplir les côtés de la structure parallélépipédique par tous moyens appropriés tels que plaques, grille, barreaux ou analogues.

## Revendications

1. Outil automatique de cueillette d'une plante poussant dans le sol du type comportant un guide, s'enfonçant verticalement dans le sol, associé à un moyen de coupe disposé au voisinage de l'extrémité dudit guide, **caractérisé par le fait que** le guide est constitué par une structure parallélépipédique (1, 2, 3, 4, 7) et le moyen de coupe est constitué d'au moins un élément tranchant (5, 6, 22-23-24, 33-34) monté à pivotement à l'extrémité de la structure parallélépipédique (1-2-3-4-7 ; 30-31-32-33-34) le pivotement de cet élément tranchant provoquant simultanément la coupure de la plante et la fermeture de la base du parallélépipède ; de sorte que lorsque le guide est relevé il entraîne avec lui un volume de terre sensiblement parallélépipédique à l'intérieur duquel se trouve la plante à cueillir.

2. Outil selon la revendication 1 dans lequel l'élément tranchant est constitué de deux volets (5, 6) montés à pivotement sur deux côtés opposés de la structure parallélépipédique (1, 2, 3, 4, 7) chaque volet étant attelé à une bielle de commande (8, 9), ces deux bielles étant, à leur autre extrémité attelées à une barre (11) coulissant dans des glissières (12) sous l'effet d'un vérin (13).

3. Outil selon la revendication 1, dans lequel l'élément tranchant est constitué par un godet ouvert (22-23-24) monté à pivotement sur une barre transversale (25) portée par deux (1, 2) des quatre tiges (1, 2, 3, 4) de la structure parallélépipédique, ce godet pivotant étant commandé par un vérin (27) auquel il est relié par une bielle (26).

4. Outil selon la revendication 1, dans lequel la structure parallélépipédique est constituée de deux fers plats (30, 31) portant au moins un cadre (32) et deux godets (33, 34) qui en position ouverte ont un encombrement correspondant à celui des cadres (32).

5. Outil selon la revendication 4, dans lequel la structure parallélépipédique porte à son extrémité inférieure deux godets (33 et 34) montés à pivotement sur les fers plats (30, 31) et actionnés, chacun, par un vérin (40) au moyen d'une bielle (39).

6. Outil selon l'une quelconque des revendications précédentes, dans lequel la structure parallélépipédique (1-2-3-4-7 ; 30-31-32-33-34), ainsi que les éléments tranchants et obturant (5-6 ; 22-23-24 ; 33-34) leurs bielles de commande (8, 9 ; 26, 39) et leurs vérins (13, 27, 40) sont portés par une tige (21) qui enfonce cet ensemble dans le sol et l'en retire.

7. Outil selon l'une quelconque des revendications précédentes, dans lequel les côtés du parallélépipède peuvent être fermés par des tôles.

## Patentansprüche

1. Automatisches Erntewerkzeug für eine Pflanze, die im Boden wächst, von der Art mit einer Führung, die sich vertikal in den Boden senkt und mit einer Schneideinrichtung verbunden ist, die nahe dem Ende der Führung angeordnet ist, **dadurch gekennzeichnet, daß** die Führung aus einer Parallelepiped-Struktur (1, 2, 3, 4, 7) und die Schneideinrichtung aus mindestens einem Schneidelement (5, 6, 22-23-24, 33-34) gebildet ist, das verschwenkbar am Ende der Parallelepiped-Struktur (1-2-3-4-7; 30-31-32-33-34) montiert ist, wobei das Verschwenken dieses Schneidelementes gleichzeitig das Abschneiden der Pflanze und das Verschließen der Basis des Parallelepipeds bewirkt, so daß die Führung, wenn sie wieder angehoben wird, ein Erdvolumen mit sich nimmt, das im wesentlichen parallelepipedförmig ist und in dessen Innerem sich die zu erntende Pflanze befindet.

2. Werkzeug nach Anspruch 1, bei dem das Schneidelement aus zwei Klappen (5, 6) gebildet ist, die verschwenkbar auf zwei gegenüberliegenden Seiten der Parallelepiped-Struktur (1, 2, 3, 4, 7) montiert sind, wobei jede Klappe an ein Betätigungsglied (8, 9) angekoppelt ist und die beiden Glieder mit ihrem anderen Ende an eine Stange (11) angekoppelt sind, die in Gleitschienen (12) unter der Einwirkung eines Zylinders (13) gleitet.

3. Werkzeug nach Anspruch 1, bei dem das Schneidelement durch eine offene Schaufel (22-23-24) gebildet ist, die verschwenkbar an einer Querstange (25) montiert ist, die von zwei (1, 2) der vier Schäfte (1, 2, 3, 4) der Parallelepiped-Struktur getragen wird, wobei diese verschwenkbare Schaufel durch einen Zylinder (27) betätigt wird, mit dem sie über eine Stange (26) verbunden ist.

4. Werkzeug nach Anspruch 1, bei dem die Parallelepiped-Struktur aus zwei Flacheisen (30, 31) gebildet ist, die mindestens einen Rahmen (32) und zwei Schaufeln (33, 34) tragen, welche in geöffneter Stellung einen Platzbedarf haben, der dem der Rahmen (32) entspricht.

5. Werkzeug nach Anspruch 4, bei dem die Parallelepiped-Struktur an ihrem unteren Ende zwei Schaufeln (33 und 34) trägt, die verschwenkbar auf den Flacheisen (30, 31) montiert sind und jeweils über einen Zylinder (40) mittels einer Stange (39) betätigt werden.

6. Werkzeug nach einem der vorhergehenden Ansprüche, bei dem die Parallelepiped-Struktur (1-2-3-4-7; 30-31-32-33-34) sowie die Schneid- und Verschlußelemente (5-6; 22-23-24; 33-34), ihre Betätigungsglieder (8,9; 26, 39) und ihre Zylinder (13, 27, 40) von einem Schaft (21) getragen werden, der diese Einheit in den Boden absenkt und aus diesem wieder zurückzieht.

7. Werkzeug nach einem der vorhergehenden Ansprüche, bei dem die Seiten des Parallelepipeds mit Blechen verschlossen sein können.

## Claims

1. An automatic tool for harvesting a plant growing in the soil, of the type having a guide which plunges vertically into the soil and is associated with a cutter arranged in the vicinity of the end of the said guide, **characterised in that** the guide is formed by a parallelepiped structure (1, 2, 3, 4, 7) and the cutter is formed by at least one slicing element (5, 6, 22-23-24, 33-34) mounted to pivot at the end of the parallelepiped structure (1-2-3-4-7; 30-31-32-33-34), pivoting of this slicing element bringing about cutting of the plant and closure of the base of the parallelepiped at the same time, such that when the guide is raised again it brings with it a substantially parallelepiped volume of earth inside which is the plant for harvesting.

2. A tool according to Claim 1, in which the slicing element is formed by two flaps (5, 6) mounted to pivot on two opposing sides of the parallelepiped structure (1, 2, 3, 4, 7), each flap being attached to a control rod (8, 9), these two rods being attached at their other end to a bar (11) which slides in sliding rails (12) under the action of a jack (13).

3. A tool according to Claim 1, in which the slicing element is formed by an open bucket-shaped element (22-23-24) mounted to pivot on a cross bar (25) bome by two (1, 2) of the four rods (1, 2, 3, 4) of the parallelepiped structure, this pivotal bucket-shaped element being controlled by a jack (27) to which it is connected by a rod (26).

4. A tool according to Claim 1, in which the parallelepiped structure is formed by two flat plates (30, 31) bearing at least one frame (32) and two bucket-shaped elements (33, 34) which, when in the open position, occupy a volume corresponding to that of the frames (32).

5. A tool according to Claim 4, in which the parallelepiped structure bears at its lower end two bucket-shaped elements (33 and 34) mounted to pivot on the flat plates (30, 31) and each actuated by a jack (40) by way of a rod (39).

6. A tool according to any one of the preceding claims, in which the parallelepiped structure (1-2-3-4-7; 30-31-32-33-34) and the slicing and closing elements (5-6; 22-23-24; 33-34), the control rods (8, 9; 26, 39) associated therewith and the jacks (13, 27, 40) associated therewith are borne by a rod (21 ) which plunges this unit into the soil and withdraws it therefrom again.

7. A tool according to any one of the preceding claims, in which the sides of the parallelepiped may be closed off by metal sheets.
